# EUROPÄISCHE PATENTSCHRIFT

(11) **EP 3 730 543 B1**
(45) Veröffentlichungstag und Bekanntmachung des Hinweises auf die Patenterteilung: **07.02.2024**
(21) Anmeldenummer: 20000115.4
(22) Anmeldetag: 18.03.2020
(51) Int. Cl.: C08J 9/14, C08J 9/18

(54) **VERFAHREN ZUR HERSTELLUNG VON EXPANDIERBAREN ODER ZUMINDEST TEILWEISE EXPANDIERTEN POLYMERPARTIKELN AUF DER BASIS VON POLYLACTID UND DANACH HERGESTELLTE POLYMERPARTIKEL**
METHOD FOR THE PREPARATION OF EXPANDABLE OR AT LEAST PARTIALLY EXPANDED POLYMER PARTICLES BASED ON POLYLACTIDE AND POLYMER PARTICLES PRODUCED FROM SAME
PROCÉDÉ DE FABRICATION DE PARTICULES POLYMÈRES EXPANSIBLES OU AU MOINS PARTIELLEMENT EXPANSÉES À BASE DE POLYLACTIDE ET PARTICULES POLYMÈRES AINSI PRODUITES

(30) Priorität: 26.04.2019 DE 102019002975
(43) Veröffentlichungstag der Anmeldung: 28.10.2020
(73) Patentinhaber: Fraunhofer-Gesellschaft zur Förderung der angewandten Forschung e.V., 80686 München (DE)
(72) Erfinder: Dennard, Anja, 76327 Pfinztal (DE); Basler, Aaron, 76327 Pfinztal (DE); Mack, Christoph, 76437 Pfinztal (DE)
(74) Vertreter: Lichti - Patentanwälte Partnerschaft mbB

(56) Entgegenhaltungen:
- EP-B1- 2 135 724
- US-A1- 2007 141 286
- US-B1- 6 573 308

## Beschreibung

Die Erfindung betrifft ein Verfahren zur Herstellung von thermoplastischen, expandierbaren und/oder zumindest teilweise expandierten Polymerpartikeln aus einer Polymermatrix, welche aus Polylactid oder einem Polymer-Blend aus wenigstens 90 Mass.-% Polylactid mit wenigstens einem weiteren thermoplastischen Polymer gebildet ist, sowie solchermaßen hergestellte thermoplastische, expandierbare und/oder zumindest teilweise expandierte Polymerpartikel aus einer Polymermatrix, welche aus Polylactid oder einem Polymer-Blend aus wenigstens 90 Mass.-% Polylactid mit wenigstens einem weiteren thermoplastischen Polymer gebildet ist.

Thermoplastische, mittels eines Treibmittels expandierbare oder zumindest teilweise expandierte Polymerpartikel, welche auch als Polymerschaumpartikel bezeichnet werden, finden vornehmlich zur Herstellung von Polymer-Formteilen Verwendung, wobei die Polymerpartikel - seien sie bereits zumindest teilweise expandiert oder seien sie noch im Wesentlichen kompakt, aufgrund ihres Treibmittelgehaltes aber expandierbar - in einem entsprechenden Formwerkzeug, insbesondere unter Einwirkung von Heißdampf, oberflächig unter Bildung des Formteils miteinander verschweißt werden. Sofern in den expandierbaren Polymerpartikeln noch ein Anteil des Treibmittels enthalten ist, werden die Polymerpartikel dabei expandiert bzw. aufgeschäumt, wodurch eine großflächige Schweißverbindung der expandierten Polymerpartikel untereinander bei einer geringen Dichte des Formteils erzielt werden kann.

Alternativ ist es bekannt, die expandierbaren oder bereits zumindest teilweise expandierten Polymerpartikel unter Einwirkung von elektromagnetischer Strahlung, z.B. im Mikrowellen-, Radiofrequenzbereich oder dergleichen, zu erhitzen, so dass sie in dem Formwerkzeug gleichfalls miteinander verschweißt werden, wobei sie aus den oben genannten Gründen insbesondere ebenfalls zumindest teilweise expandiert werden. Sofern die jeweils eingesetzten Polymere nicht selbst ein hinreichendes Absorptionsvermögen für den jeweiligen Frequenzbereich der elektromagnetischen Strahlung besitzen, können sie mit einem elektromagnetische Strahlung, z.B. im Mikrowellen- und/oder Radiofrequenzspektrum, absorbierenden Medium, z.B. Wasser, beschichtet bzw. benetzt werden.

Solchermaßen hergestellte Polymer-Formteile zeichnen sich aufgrund der Kompressibilität des aus den expandierten und miteinander verschweißten Polymerpartikeln gebildeten Polymerschaums geringer Dichte durch ein hohes Wärme-, Schall- und Stoßabsorptionsvermögen aus und werden daher vornehmlich für Dämmstoffmaterialien, wie Dämmplatten zur Isolierung von Gebäuden oder anderen Dämmbauteilen, z.B. für Rollladenkästen, Fensterprofile, für den Heizungsbau, für Isolierbehälter und dergleichen, in der Automobiltechnik, für Verpackungsmaterialien, als Kernmaterialien von sandwichartigen Formteilen, z.B. Sportartikel, Surfbretter, Bootskörper etc., für den Modellbau etc. eingesetzt. Darüber hinaus bestehen Anwendungsgebiete für lose, d.h. nicht zu einem Formteil miteinander verschweißte, expandierte Polymerpartikel bzw. Polymerschaumpartikel z.B. in Füllmaterialien für Verpackungszwecke, für Sitzsäcke und dergleichen, als Dämmmaterialien zur Einblasdämmung oder auch als Schneeimitat, z.B. zu Dekorationszwecken.

Die Herstellung von expandierbaren oder zumindest teilweise expandierten Partikeln aus thermoplastischen Polymeren geschieht in der Praxis vornehmlich im Rahmen eines Extrusionsvorgangs, an welchen sich ein Granuliervorgang des aus einer Düse oder eines Düsenaggregates des Extruders ausgetretenen Polymerstrangs anschließt. Es wird das thermoplastische Polymer oder ein Polymer-Blend aus zwei oder mehreren solcher thermoplastischer Polymere folglich z.B. in Pulver- oder Granulatform dem Extruder aufgegeben und in dem Extruder plastifiziert und homogenisiert. Sodann wird - sofern nicht bereits in dem eingesetzten Polymerpulver oder -granulat enthalten - ein Treibmittel in das Plastifikat eingebracht, was in aller Regel unter Druck geschieht. Aufgrund des hohen Druckniveaus in dem Extruder, welches bis zu einigen 100 bar betragen kann, liegt das Treibmittel auch bei der Schmelztemperatur des bzw. der plastifizierten Polymers bzw. Polymere in flüssiger und/oder überkritischer Phase vor und wird insbesondere in dem Plastifikat gelöst. Unmittelbar nach Austritt aus der Extruderdüse bzw. dem z.B. in Form einer Lochplatte gebildeten Düsenaggregat kommt es infolge des abrupten Druckabfalls, z.B. auf Umgebungsdruck, zum Expandieren bzw. Aufschäumen des/der Polymerstrangs/-stränge aufgrund schneller Expansion des Treibmittels, insbesondere unter Überführen desselben in die Gasphase. Die Zerkleinerung bzw. Granulierung des Polymerstrangs geschieht üblicherweise mittels einer dem Extruder nachgeordneten Schneideinrichtung, welche beispielsweise eine koaxial zur Extruderdüse rotierende Schneide besitzt. Während es bei kompakten bzw. ungeschäumten Polymeren auch bekannt ist, den/die Polymerstrang/-stränge durch ein Wasserbad zu leiten und anschließend - nach hinreichender Abkühlung - zu granulieren, erfolgt die Zerkleinerung bei expandierten bzw. aufgeschäumten Polymeren mittels der Schneideinrichtung z.B. in einer mit Wasser gefüllten Kammer, um den mit Treibmittel(n) versetzten Polymerstrang schnell abzukühlen und die bei der Expansion des Treibmittels entstehende feinporige Schaumstruktur "einzufrieren".

Um für eine möglichst homogene, innige Schweißverbindung der expandierbaren oder bereits zumindest teilweise expandierten Polymerpartikel in einem aus diesen erzeugten Polymer-Formteil zu sorgen, ist es in der Regel erwünscht, dass die Polymerpartikel eine möglichst sphärische, zumindest aber abgerundete Außenkontur besitzen. Hieraus ergibt sich anlässlich der Herstellung der Polymerpartikel selbst das Erfordernis, den aus der Extruderdüse ausgebrachten, aufschäumenden Polymerstrang möglichst schnell zu den Polymerpartikeln zu zerkleinern bzw. zu granulieren, da sich eine kugelförmige Gestalt der Partikel insbesondere dann erzielen lässt, solange sich der Polymerstrang noch in einem zumindest teilplastischen Zustand befindet. Demgegenüber sollte das aus der Extruderdüse ausgetretene Polymer jedoch auch möglichst schnell abgekühlt bzw. "abgeschreckt" werden, damit sich eine im Wesentlichen homogene, feinporige Schaumstruktur ausbilden kann und die aus expandierendem Treibmittel gebildeten Bläschen in der Polymermatrix nicht kollabieren.

Alternativ ist es auch bekannt, den Expandier- bzw. Schäumvorgang getrennt von dem Extrusionsvorgang vorzunehmen, indem der aus der Extruderdüse ausgebrachte Polymerstrang in weitestgehend ungeschäumter Form zunächst granuliert und anschließend - z.B. unter Initiierung eines geeigneten, in dem Polymergranulat enthaltenen Treibmittels mittels Heißdampf in einer Aufschäumeinheit - aufgeschäumt wird.

Während für die Herstellung von expandierbaren oder zumindest teilweise expandierten Polymerpartikeln in der Praxis vornehmlich thermoplastische Polymere aus fossilen Rohstoffen zum Einsatz gelangen, wie z.B. Polystyrol (PS), Polypropylen (PP), Polyethylen (PE) oder beliebige andere thermoplastische Polymere, welche aus fossilen Rohstoffen gewonnen werden, besteht aus Umweltschutzgründen sowie im Hinblick auf eine Einsparung der zur Verfügung stehenden Erdölressourcen ein zunehmender Bedarf an einer Substitution solcher synthetischer thermoplastischer Polymere durch thermoplastische Polymere, welche aus nachwachsenden, natürlichen Rohstoffen gewonnen werden können. Ein solches, für den Einsatz in thermoplastischen Polymerschaumpartikeln grundsätzlich geeignetes Polymer stellt Polylactid (PLA) bzw. Polymilchsäue dar, welches biologisch abbaubar und gut recyclebar ist und beispielsweise durch ionische Polymerisation von Lactid, einem ringförmigen Zusammenschluss von zwei Milchsäuremolekülen, erhalten werden kann. Darüber hinaus können Polylactide z.B. durch Polykondensation direkt aus Milchsäure erzeugt werden. Ferner kann Polylactid zur Herstellung von Polymerschaumpartikeln grundsätzlich in im Wesentlichen reiner Form als auch in Form eines Polymer-Blends, sogenannter "PLA-Blend", mit anderen thermoplastischen, vorzugsweise gleichfalls aus nachwachsenden Rohstoffen gewonnenen, Polymeren eingesetzt werden.

Ein Problem bei expandierbaren oder zumindest teilweise expandierten Polymerpartikeln auf der Basis von Polylactid besteht gegenwärtig indes insbesondere darin, dass auch im Falle eines nachträglichen, d.h. nach der Granulierung durchgeführten Expansions- bzw. Schäumvorgangs nur eine relativ hohe Schüttdichte der expandierten bzw. aufgeschäumten Polymerpartikel erreicht werden kann, welche aus einem nur relativ geringen Porenvolumen der Polylactid-Schaumpartikel resultiert.

So beschreibt die EP 2 135 724 B1 ein Verfahren zur Herstellung von Polylactid-Schaumpartikeln auf der Basis eines polymilchsäurebasierten Harzes, indem das polymilchsäurebasierte Harz, welches beide optischen Isomere (D-Form und L-Form) von Milchsäure als Monomerkomponenten enthält, in einem Extruder in Gegenwart eines Treibmittels homogenisiert wird. Sodann wird das Extrudat des polymilchsäurebasierten Harzes durch eine Düse des Extruders ausgebracht und mittels einer rotierenden Klinge unmittelbar stromab der Extruderdüse granuliert, um aus dem Extrudat unter Aufschäumung des polymilchsäurebasierten Harzes die Polylactid-Schaumpartikel zu erzeugen. Um für eine schnelle Abkühlung des Extrudates zu sorgen, werden die frisch granulierten Polylactid-Schaumpartikel entweder mit Wasser besprüht, oder es kann eine Kontaktkühlung vorgesehen sein, indem die Polylactid-Schaumpartikel mit der inneren Mantelfläche einer rotierenden Trommel in Kontakt gebracht werden, welche unmittelbar stromab der Extruderdüse angeordnet ist. Als mögliche Treibmittel werden sowohl chemische Treibmittel, wie Azodicarbonamid, Dinitrosopentamethylentetramin, Hydrazoyldicarbonamid and Natriumbicarbonat, als auch physikalische Treibmittel, wie gesättigte aliphatische Kohlenwasserstoffe, z.B. Propan, n-Butan, iso-Butan, n-Pentan, iso-Pentan und Hexan, Etherverbindungen, wie Dimethylether, Methylchlorid, Fluorchlorkohlenwasserstoffe, wie 1,1,1,2-Tetrafluorethan, 1,1-Difluorethan and Monochlordifluormethan, Kohlendioxid und Stickstoff, vorgeschlagen.

Allerdings lassen sich auf diese Weise nur Polylactid-Schaumpartikel erzeugen, welche zwar praktisch sortenrein sind und somit im Wesentlichen gänzlich aus nachwachsenden Rohstoffen (Polylactid) bestehen, aber relativ hohe Schüttdichten im Bereich von 210 g/l aufweisen, welche zur (Zwischen)lagerung der Schaumpartikel zwar von Vorteil sein können, aber zur späteren Verarbeitung - sei es zu einem Formteil oder sei es zum Einsatz in loser Schüttung - nur bedingt geeignet sind, weil sie aufgrund ihres geringen Porenvolumens nur mäßige Wärme-, Schall- und stoßabsorbierende Dämmeigenschaften besitzen. Um dem zu begegnen, schlägt die EP 2 135 724 B1 ferner vor, dass die Polylactid-Schaumpartikel vor ihrer Verarbeitung zu einem Formteil in einem druckfesten Formwerkzeug zunächst mit einem Inertgas bei einer Temperatur zwischen -40°C bis 25°C und bei einem Druck von 0,2 MPa bis 1,6 MPa imprägniert werden. Sodann werden die Polylactid-Schaumpartikel unter Wärmeeinwirkung vorgeschäumt und anschließend nochmals mit einem Inertgas bei einer Temperatur zwischen -40°C bis 25°C und bei einem Druck von 0,2 MPa bis 1,6 MPa imprägniert. Indes lassen sich auch auf diese Weise nur Schüttdichten von bis zu mindestens 48 g/l erzeugen, zumal sich die mehrfache Druckimprägnierung in vorrichtungstechnischer Hinsicht als aufwändig und teuer erweist.

Darüber hinaus sind Verfahren zur Herstellung von thermoplastischen, expandierbaren Polymerpartikeln auf der Basis von Polylactid bekannt, bei welchen die Schüttdichte der erzeugten Polymerpartikel dadurch verringert wird, indem das Polylactid in Gegenwart von Vernetzungsmitteln und/oder Kettenverlängerungsmitteln mit synthetischen Polymeren zur Reaktion gebracht wird, wobei es sich vornehmlich bei den Vernetzungs- und Kettenverlängerungsmitteln um wenig umweltfreundliche und insbesondere gesundheitsschädliche Substanzen handelt, welche zudem die thermoplastischen Eigenschaften des Polylactids und folglich auch dessen Recyclebarkeit beeinträchtigen, wobei auch eine Sortenreinheit der expandierbaren Polymerpartikel nicht erzielt werden kann.

Die EP 2 524 004 B1 beschreibt ein solches Verfahren zur Herstellung von expandierbaren Polymerpartikeln auf der Basis von vernetztem Polylactid, welches die folgenden Schritte umfasst:
(a) Aufschmelzen und Einmischen der Komponenten
   (i) 50 bis 98,9 Mass.-% Polymilchsäure,
   (ii) 1 bis 49,9 Mass.-% wenigstens eines Polyesters auf der Basis von aliphatischen und/oder aromatischen Dicarbonsäuren und aliphatischen Dihydroxyverbindungen,
   (iii) 0,1 bis 2 Mass.-% eines epoxidgruppenhaltigen Co-Polymers auf der Basis von Styrol, Acrylsäureester oder Methacrylsäureester und
   (iv) 0 bis 10 Mass.-% eines oder mehrerer Additive;
(b) Einmischen von
   (v) 3 bis 7 Mass.-% eines organischen Treibmittels in die Polymerschmelze bei einer Temperatur von mindestens 140°C;
(c) Austragen der treibmittelbeladenen Polymerschmelze durch eine Düsenplatte; und
(d) Granulieren der treibmittelhaltigen Schmelze unmittelbar stromab der Düsenplatte unter Wasser bei einem Druck im Bereich von 1 bar bis 20 bar sowie insbesondere bei einer Temperatur zwischen 5°C und 20°C.

Während als Treibmittel vornehmlich n-Pentan oder ein Gemisch aus n-Pentan und iso-Pentan eingesetzt werden soll, werden auch andere, insbesondere physikalische, Treibmittel vorgeschlagen, wie sie üblicherweise in expandierten Polystyrolschäumen zum Einsatz gelangen, wie aliphatische Kohlenwasserstoffe mit 2 bis 7 Kohlenstoffatomen, z.B. iso-Butan, n-Butan, n-Pentan und iso-Pentan, Alkohole, Ketone, Ether, Amide oder halogenierte Kohlenwasserstoffe. Ferner kommen Co-Treibmittel zum Einsatz, wie Stickstoff, Kohlendioxid, Luft oder Edelgase. Die solchermaßen erzeugten Schaumpartikel auf der Basis von vernetztem Polylactid weisen unmittelbar nach ihrer Granulierung in dem Wasserbad unter einem Druck zwischen 9 bar und 12 bar relativ hohe Schüttdichten im Bereich von etwa 650 g/l bis 740 g/l auf, wobei sie durch eine einfache Wärmebehandlung unter Einwirkung von strömendem Wasserdampf auf Schüttdichten bis zu mindestens 30 g/l vorgeschäumt werden können.

Ein ähnliches Verfahren zur Herstellung von expandierbaren Partikeln auf der Basis von vernetztem Polylactid ist der EP 2 617 771 B1 zu entnehmen, wobei das Verfahren die folgenden Schritte umfasst:
(a) Aufschmelzen und Einmischen der Komponenten
   (i) 50 bis 99,9 Mass.% Polymilchsäure,
   (ii) 0 bis 49,9 Mass.% eines oder mehrerer weiterer Polymere,
   (iii) 0,1 bis 2 Mass.% eines Diepoxids oder Polyepoxids, und
   (iv) 0,1 bis 5 Mass.-% eines Nukleierungsmittels;
(b) Einmischen von
   (v) 1 bis 7 Mass.-% eines organischen Treibmittels und
   (vi) 0,01 bis 5 Mass.-% eines Co-Treibmittels aus der Gruppe Stickstoff, Kohlendioxid, Argon, Helium oder Mischungen hiervon in die Polymerschmelze bei einer Temperatur von mindestens 140°C;
(c) Austragen der treibmittelbeladenen Polymerschmelze durch eine Düsenplatte und
(d) Granulieren der treibmittelhaltigen Schmelze unmittelbar stromab der Düsenplatte unter Wasser bei einem Druck im Bereich von 1 bis 20 bar sowie insbesondere bei einer Temperatur zwischen 5°C und 20°C.

Während als Treibmittel wiederum vornehmlich n-Pentan oder ein Gemisch aus n-Pentan und iso-Pentan eingesetzt werden soll, werden auch andere, insbesondere physikalische, Treibmittel vorgeschlagen, wie sie üblicherweise in expandierten Polystyrolschäumen zum Einsatz gelangen, wie aliphatische Kohlenwasserstoffe mit 2 bis 7 Kohlenstoffatomen, z.B. iso-Butan, n-Butan, n-Pentan und iso-Pentan, Alkohole, Ketone, Ether, Amide oder halogenierte Kohlenwasserstoffe. Als Co-Treibmittel kommen auch hier vornehmlich Inertgase, wie Stickstoff, Kohlendioxid, Luft oder Edelgase, zum Einsatz. Die solchermaßen erzeugten Schaumpartikel auf der Basis von vernetztem Polylactid weisen unmittelbar nach ihrer Granulierung in dem Wasserbad unter einem Druck zwischen 9 bar und 12 bar relativ hohe Schüttdichten im Bereich von etwa 650 g/l bis 740 g/l auf, wobei sie durch eine einfache Wärmebehandlung unter Einwirkung von strömendem Wasserdampf auf Schüttdichten bis zu mindestens 30 g/l vorgeschäumt werden können.

In der WO 2017/211660 A1 geht es um ein weiteres Verfahren zur Herstellung von expandierten Polylactidpartikeln mit einem Anteil an Polylactid zwischen 65 Mass.-% und 95 Mass.-%, einem Anteil an weiteren Polyestern zwischen 15 Mass.-% und 35 Mass.-% sowie einem Vernetzungs- bzw. Kettenverlängerungsmittels in Form von Peroxiden oder Epoxiden. Als Treibmittel ist insbesondere iso-Pentan vorgesehen, wobei aber auch eine Reihe anderer Treibmittel einschließlich aliphatischer Kohlenwasserstoffe mit 2 bis 7 Kohlenstoffatomen, Alkoholen, Ketonen, Ethern, Amiden oder halogenierten Kohlenwasserstoffen als geeignet erachtet werden. Bei allen in den Ausführungsbeispielen erwähnten Zusammensetzungen, mittels welchen Schaumpartikel mit geringer Schüttdichte erzeugt werden können, kommt ein unter dem Handelsnamen "Joncryl"^{™} der BASF AG (Deutschland) vertriebenes Kettenverlängerungsmittel zum Einsatz (vgl. z.B. auch Volker Frenz, Dietrich Scherzer, Marco Villalobos, Abiodun A. Awojulu, Michael Edison, Roelof van der Meer: "Multifunctional Polymers as Chain Extenders and Compatibilizers for Polycondensates and Biopolymers", ANTEC 2008, Seiten 1682-1686), welches wiederum zu einem vernetzten Schaumstoff mit den oben geschilderten Nachteilen führt.

Überdies beschreibt die WO 2012/020112 A1 ein Verfahren zur Herstellung eines Granulates aus thermoplastischen Polyestern, welches die folgenden Schritte umfasst:
(a) Aufgeben der Polymermatrix, bei welcher es sich vornehmlich um Polyester handelt, in einen Extruder sowie Plastifizieren und Homogenisieren der Polymermatrix in dem Extruder;
(b) Zusetzen eines physikalischen Treibmittels und Eindispergieren des Treibmittels in die plastifizierte Polymermatrix in dem Extruder, wobei es sich bei dem physikalischen Treibmittel insbesondere um organische Treibmittel, vorzugsweise in Form von aliphatischen Kohlenwasserstoffen, handelt;
(c) Ausbringen des mit dem Treibmittel versetzten, plastifizierten Polyesters aus dem Extruder durch eine Düsenplatte; und
(d) Granulieren des extrudierten und mit dem Treibmittel versetzten Polymerstrangs stromab der Düsenplatte unter Bildung der expandierbaren und/oder zumindest teilweise expandierten Polymerpartikel in einem Wasserbad bei einem Druck von 1 bar bis 0 bar.
Neben einer Vielzahl an unterschiedlichen Polyestern sehen die Ausführungsbeispiele verschiedene Polyestermischungen aus vornehmlich Polycarbonaten des Typs "Makrolon^{™} 2800" vor, wobei unter anderem eine plastifizierbare Polyestermischung aus 79,2 Mass.-% Polycarbonat des Typs "Makrolon^{™} 2800" und einem geringen Anteil von 19,8 Mass.-% Polylactid offenbart ist, welche mit Isopentan als Treibmittel versetzt und zu Schaumpartikeln mit einer geringen Schüttdichte von 78 g/l verarbeitet wird.

Die US 6 573 308 B1 beschreibt ein Verfahren zur Herstellung von thermoplastischen Polymerschaumpartikeln aus einer Polymermischung, enthaltend
(a) eine biologisch abbaubare Mischung aus einem gesättigten aliphatischen/aromatischen Copolyester und
(b) einem biologisch abbaubaren natürlichen Polymer in einem Mischungsverhältnis der obigen Komponenten (A):(B) zwischen 9:1 und 1:9,
wobei die Polymermischung geschmolzen, mit einem organischen Treibmittel versetzt, extrudiert und granuliert wird. Während es sich bei dem gesättigten Copolyester der Komponente (a) insbesondere um ein Polykondensationsprodukt handeln kann, welches aus Gemischen aus (cyclo)aliphatischen und aromatischen Dicarbonsäuren und deren Ester sowie (Cyclo)alkandiolen erhalten worden ist, sind als natürliche Polymere der Komponente (b) Stärke, Cellulose, Poly(hydroxycarbonsäuren), wie Polymilchsäure und Polyhydroxybuttersäure, sowie Poly(aminocarbonsäuren), wie Polyasparaginsäure und deren Derivate, genannt. Als geeignete Treibmittel werden C₃-C₈-Kohlenwasserstoffe, halogenierte Kohlenwasserstoffe und C₁-C₃-Alkohole, wie z.B. Butan, Pentan, iso-Butan und Ethanol, angegeben.

In der US 2007/141286 A1 geht es schließlich um ein Extrusionsverfahren zur Herstellung einer geschäumten Folie aus einem Polymilchsäureharz, wobei durch unterschiedliche Temperatureinstellungen der Kristallisationsgrad und die Thermoformbarkeit der geschäumten Folie verbessert werden kann.

Der Erfindung liegt die Aufgabe zugrunde, unter zumindest weitestgehender Vermeidung der vorgenannten Nachteile ein einfaches und kostengünstiges Verfahren zur Herstellung von thermoplastischen, expandierbaren und/oder zumindest teilweise expandierten Polymerpartikeln auf der Basis von Polylactid der eingangs genannten Art vorzuschlagen, bei welchem die Polymerstruktur des Polylactids erhalten bleibt und insbesondere nicht mit weiteren Reaktionspartnern umgesetzt wird, aber gleichwohl expandierbare Polymerpartikel erhalten werden können, welche eine relativ hohe Schüttdichte besitzen, aber durch eine einfache Temperaturbehandlung zu Schaumpartikeln mit einer sehr geringen Schüttdichte bis hin zu einer Schüttdichte unterhalb jener des Standes der Technik vorgeschäumt werden können. Sie ist ferner auf solchermaßen hergestellte thermoplastische, expandierbare und/oder zumindest teilweise expandierte Polymerpartikel auf der Basis von Polylactid gerichtet.

In verfahrenstechnischer Hinsicht wird diese Aufgabe mit einem Verfahren der eingangs genannten Art gelöst, welches die folgenden Schritte umfasst:
(a) Aufgeben der Polymermatrix in einen Extruder sowie Plastifizieren und Homogenisieren der Polymermatrix in dem Extruder unter Ausschluss von Vernetzungsmitteln und/oder Kettenverlängerungsmitteln;
(b) Zusetzen von wenigstens einem organischen Treibmittel aus der Gruppe n-Butan, iso-Butan und Propan einschließlich Mischungen derselben und Eindispergieren des wenigstens einen Treibmittels in die plastifizierte Polymermatrix in dem Extruder;
(c) Ausbringen des mit dem wenigstens einen Treibmittel versetzten, plastifizierten Polylactids aus dem Extruder durch wenigstens eine Extruderdüse; und
(d) Granulieren des extrudierten und mit dem wenigstens einen Treibmittel versetzten Polymerstrangs stromab der Extruderdüse unter Bildung der expandierbaren und/oder zumindest teilweise expandierten Polymerpartikel,
wobei die Schritte (c) und (d) in einem unter gegenüber Umgebungsdruck erhöhten Druck stehenden Kühlfluid durchgeführt werden, in welchem die Polymerpartikel unter deren Glastemperatur abgekühlt werden.

Zur Lösung dieser Aufgabe sieht die Erfindung ferner solchermaßen hergestellte thermoplastische, expandierbare und/oder zumindest teilweise expandierte Polymerpartikel der eingangs genannten Art vor, wobei die Polymermatrix der Polymerpartikel frei von Vernetzungsmitteln und/oder Kettenverlängerungsmitteln ist und wenigstens ein organisches Treibmittel aus der Gruppe n-Butan, iso-Butan und Propan einschließlich Mischungen derselben enthält.

Überraschenderweise wurde gefunden, dass sich durch die Kombination des Einsatzes eines organischen Treibmittels aus der Gruppe n-Butan, iso-Butan und Propan einschließlich Mischungen derselben in Verbindung mit einem Granulieren des frisch extrudierten und mit einem solchen Treibmittel versetzten Polymerstrangs stromab der Extruderdüse oder einem Extruderdüsenaggregat, z.B. nach Art einer Lochplatte, in einem unter gegenüber Umgebungsdruck erhöhten Druck stehenden Kühlfluid nicht nur expandierbare und/oder bereits zumindest teilweise expandierte Polymerpartikel auf der Basis von Polylactid erzeugen lassen, welche eine mit dem oben erwähnten Stand der Technik gemäß EP 2 524 004 B1 und EP 2 617 771 B1 etwa vergleichbar hohe Schüttdichte aufweisen, sondern die solchermaßen erzeugten, expandierbaren Polymerpartikel auf der Basis von Polylactid auch durch eine einfache Temperaturbehandlung (siehe hierzu weiter unten), welche keine Imprägnierung in einem Druckraum entsprechend der oben erwähnten EP 2 135 724 B1 erfordert, zu expandierten bzw. geschäumten Polymerpartikeln mit einer sehr geringen Schüttdichte vorgeschäumt werden können, welche sogar unterhalb jener der in den EP 2 524 004 B1 und EP 2 617 771 B1 offenbarten Werte liegen kann (siehe hierzu auch weiter unten). Die anlässlich Schritt (d) des erfindungsgemäßen Verfahrens erhaltenen expandierbaren und/oder bereits zumindest teilweise expandierten Polymerpartikel auf der Basis von Polylactid lassen sich folglich lediglich unter Wärmeeinwirkung auf eine sehr geringe Schüttdichte vorschäumen, wobei der dann noch vorhandene Restgehalt des bzw. der erfindungsgemäßen Treibmittel(s) bei einem etwaigen Verschweißen der Polymerschaumpartikel zu einem Formteil nochmals für ein leichtes Aufschäumen zu sorgen vermag, so dass eine gute Füllung des Formwerkzeugs und ein flächiges und dauerhaftes Verschweißen der Schaumpartikel miteinander unter Bildung des Formteils geringer Dichte erreicht wird.

Als erfindungswesentlich erweist es sich hierbei, dass das erfindungsgemäße Verfahren dies unter Ausschluss jeglicher Vernetzungs- und/oder Kettenverlängerungsmittel einschließlich solcher auf der Basis von Epoxiden möglich macht, so dass nicht nur der Einsatz solcher umwelt- und gesundheitsschädlichen Substanzen entbehrlich gemacht wird, sondern die solchermaßen erzeugten Polymerpartikel insbesondere eine Polymermatrix aufweisen, welche aus mehr oder minder reinem - unvernetztem - Polylactid oder auch aus einem Polylactid-Blend, vorzugsweise mit wenigstens einem anderen, aus nachwachsenden Rohstoffen gewonnenen thermoplastischen Polymer gebildet ist, wie beispielsweise Stärke einschließlich deren Derivaten, Cellulose einschließlich deren Derivaten, wie z.B. Celluloseacetaten und/oder -propionaten, Polyhydroxybutyrate (PHB) und dergleichen. Sofern gewünscht, ist es alternativ oder zusätzlich ferner möglich, dem Polylactid einen oder mehrere Blend-Partner in Form von synthetischen thermoplastischen Polymeren, wie beispielsweise Polyolefinen, z.B. Polyethylen (PE), Polypropylen (PP) und dergleichen, Polystyrol (PS), Polyestern, z.B. Polyalkylenterephthalaten, vorzugsweise Polyethylenterephthalat (PET), Polybutylenterephthalat (PBT), Polybutylenadipat-terephthalat (PBAT) etc., oder dergleichen beizumischen. Der Anteil an Polylactid kann folglich insbesondere bis zu etwa 100 Mass.-% betragen, wobei er in einem Polymer-Blend erfindungsgemäß mindestens etwa 90 Mass.-% oder insbesondere mehr als etwa 95 Mass-% beträgt. Sofern die Herstellung von expandierbaren und/oder zumindest teilweise expandierten Polymerpartikeln aus einem thermoplastischen Polymer-Blend aus Polylactid mit wenigstens einem weiteren thermoplastischen Blend-Partner vorgesehen ist, werden folglich das Polylactid und der wenigstens eine Blend-Partner - sei es voneinander getrennt oder sei es z.B. in Form eines bereits geblendeten Masterbatches - gemäß Schritt (a) dem Extruder aufgegeben und gemeinsam unter Ausschluss von Vernetzungs- und/oder Kettenverlängerungsmitteln plastifiziert und homogenisiert, wobei gemäß Schritt (b) wenigstens ein organisches Treibmittel aus der Gruppe n-Butan, iso-Butan und Propan einschließlich Mischungen derselben zugesetzt und in dem Extruder in die plastifizierte Polymermatrix des Polylactids mit dem wenigstens einen Blend-Partner eindispergiert wird. Sodann wird die Polymermatrix aus dem mit dem wenigstens einen Treibmittel versetzten, plastifizierten Polylactid und dessen wenigstens einen Blend-Partner gemäß Schritt (c) durch wenigstens eine Extruderdüse aus dem Extruder ausgetragen, wonach der extrudierte und mit dem wenigstens einen Treibmittel versetzte Polymerstrang aus Polylactid mit dem wenigstens einen Blend-Partner gemäß Schritt (d) stromab der Extruderdüse unter Bildung der Schaumpartikel auf Basis von Polylactid granuliert wird, wobei die obigen Schritte (c) und (d) in einem unter gegenüber Umgebungsdruck erhöhten Druck stehenden Kühlfluid durchgeführt werden.

Das wenigstens eine organische Treibmittel aus der Gruppe n-Butan, iso-Butan und Propan kann zweckmäßigerweise in einem Anteil von etwa 1 Mass.-% bis etwa 20 Mass.-%, insbesondere von etwa 2 Mass.-% bis etwa 15 Mass.-%, vorzugsweise von etwa 3 Mass.-% bis etwa 10 Mass.-%, bezogen auf die Masse der Polymermatrix (reines Polylactid oder - im Falle eines Polymer-Blends - Polylactid einschließlich des bzw. der Blend-Partner(s)), zugesetzt werden.

Gemäß einer Ausführungsvariante des erfindungsgemäßen Verfahrens kann vorgesehen sein, dass der Polymermatrix auf der Basis von Polylactid zwischen etwa 0 und etwa 2 Mass.- %, insbesondere zwischen etwa 0 und etwa 1 Mass.-%, bezogen auf die Masse der Polymermatrix, wenigstens eines Nukleierungsmittels zugesetzt wird. Derartige, insbesondere feinpartikuläre Nukleierungsmittel sind als solche aus dem Stand der Technik bekannt und sorgen insbesondere für eine gute Bläschenbildung beim Expandieren bzw. Aufschäumen und auch für eine hohe Kristallinität des Polylactids sowie für eine hohe Wärmeformbeständigkeit desselben. Beispiele geeigneter Nukleierungsmittel umfassen insbesondere, wenngleich nicht ausschließlich, solche natürlichen Ursprungs, wie z.B. Talkum (Magnesiumsilikathydrat) oder andere Schichtsilikate.

Darüber hinaus kann vorgesehen sein, dass der Polymermatrix auf der Basis von Polylactid zwischen insgesamt etwa 0 und etwa 15 Mass.-%, insbesondere zwischen insgesamt etwa 0 und etwa 10 Mass.-%, wenigstens eines Additivs zugesetzt wird. Bei den Additiven handelt es sich um als solche aus dem Stand der Technik bekannte Additive, welche je nach Anwendungszweck der erzeugten expandierbaren und/oder zumindest teilweise expandierten Polymerpartikel auf der Basis von Polylactid eingesetzt werden können, um deren Eigenschaften an den gewünschten Anwendungszweck anzupassen. Beispiele derartiger Additive umfassen insbesondere, wenngleich nicht ausschließlich, Farbstoffe und Pigmente, Flammschutzmittel, Stabilisatoren, Infrarot-Absorber, Verarbeitungshilfsmittel und dergleichen.

Während es sich bei dem in Schritt (c) und (d) des erfindungsgemäßen Verfahrens eingesetzten Kühlfluid grundsätzlich auch um ein Gas bzw. Gasgemisch handeln kann, kann in vorteilhafter Ausgestaltung vorgesehen sein, dass als Kühlfluid eine Flüssigkeit, insbesondere ein wässriges Medium, wie beispielsweise Wasser, eingesetzt wird, welche aufgrund einer verhältnismäßig hohen Wärmekapazität für eine hohe Abkühlrate der gemäß Schritt (d) erzeugten expandierbaren Polymerpartikel zu sorgen vermag.

Je nach gewünschter Schüttdichte der gemäß Schritt (d) erzeugten expandierbaren Polymerpartikel auf der Basis von Polylactid kann vorgesehen sein, dass das Kühlfluid unter einem Druck von
- wenigstens etwa 1,5 bar, insbesondere von wenigstens etwa 2 bar, vorzugsweise von wenigstens etwa 5 bar; und/oder
- höchstens etwa 30 bar, insbesondere von höchstens etwa 25 bar, vorzugsweise von wenigstens etwa 20 bar,
gehalten wird. Dabei vermag beispielsweise ein verhältnismäßig hoher Druck des Kühlfluides von mindestens etwa 5 bar einem Expandieren bzw. Aufschäumen der Polymerpartikel anlässlich ihrer Granulierung gemäß Schritt (d) entgegenzuwirken, so dass das in den Polymerpartikeln enthaltene, wenigstens eine organische Treibmittel auf der Basis von n-Butan, iso-Butan und/oder Propan aufgrund dessen, dass das Kühlfluid die Polymerpartikel relativ schnell unter deren Glastemperatur abkühlt, so dass sie erstarren, am Entgasen gehindert wird und in hohem Maße treibmittelbeladene, expandierbare Polymerpartikel erzeugt werden, welche eine relativ hohe Schüttdichte besitzen und z.B. durch eine bloße Temperaturbehandlung zu expandierten Schaumpartikeln mit sehr geringen Schüttdichten und folglich sehr großem Porenvolumen vorgeschäumt werden können. Wird der Druck des Kühlfluides hingegen auf einen verhältnismäßig geringen Wert von bis zu etwa 5 bar eingestellt, so kann anlässlich des Granulierens gemäß Schritt (d) bereits für ein zumindest teilweises Expandieren bzw. Aufschäumen der Polymerpartikel gesorgt werden, so dass sich gegenüber einem höheren Druck des Kühlfluides geringere Schüttdichten der erhaltenen, teilweise aufgeschäumten, aber gleichwohl noch weiter expandierbaren Polymerpartikel ergeben. Letzteres kann sich beispielsweise dann anbieten, wenn die zumindest teilweise aufgeschäumten Polymerpartikel nicht über einen längeren Zeitraum zwischengelagert oder weitertransportiert, sondern mehr oder minder direkt weiterverarbeitet werden sollen.

Das Kühlfluid kann zu den genannten Zwecken z.B. auf einer Temperatur von
- wenigstens etwa 0°C, insbesondere von wenigstens etwa 5°C, vorzugsweise von wenigstens etwa 10°C; und/oder
- höchstens etwa 90°C, insbesondere von höchstens etwa 70°C, vorzugsweise von höchstens etwa 50°C,
gehalten werden.

Wie bereits angedeutet, macht es das erfindungsgemäße Verfahren insbesondere möglich, dass die gemäß Schritt (d) erhaltenen expandierbaren Polymerpartikel auf der Basis von Polylactid, welche je nach eingestelltem Druck des Kühlfluides noch im Wesentlichen kompakt oder bereits teilweise expandiert bzw. aufgeschäumt sind, aber noch eine relativ hohe Schüttdichte besitzen können, bei einer Temperatur zwischen etwa 50°C und etwa 150°C, insbesondere zwischen etwa 50°C und etwa 100°C, beispielsweise zwischen etwa 50°C und etwa 80°C, vorgeschäumt werden, um ohne eine zusätzliche Imprägnierung der Polymerpartikel mit einem Druckgas bei relativ kurzen Wärmebehandlungszeiten von kleiner 2 min expandierte Polymerpartikel bzw. Polymerschaumpartikel mit einer außerordentlich geringen Schüttdichte von bis zu kleiner 20 g/l und folglich mit einem sehr hohen Porenvolumen zu erhalten (vgl. hierzu auch die Ausführungsbeispiele weiter unten), wie es im Stand der Technik bislang selbst dann nicht möglich war, wenn das Polylactid unter Zusatz eines Vernetzungsmittels auf der Basis von Epoxiden mit Fremdpolymeren vernetzt worden ist. Dabei kann die gewünschte Schüttdichte der Polymerschaumpartikel in einfacher Weise in relativ breiten Intervallen von z.B. größer 200 g/l bis kleiner 20 g/l auf den gewünschten Wert eingestellt werden, indem die Dauer der Wärmebehandlung und/oder der Anteil an dem erfindungsgemäßen organischen Treibmittel variiert wird (vgl. hierzu ebenfalls auch die Ausführungsbeispiele weiter unten). Die Wärmebehandlung zum Vorschäumen der Polymerpartikel auf der Basis von Polylactid kann dabei in praktisch beliebiger Weise, wie z.B. mittels entsprechend temperiertem Wasserdampf, Luft, Wasser oder anderen Wärmeübertragungsfluiden, durch Exponieren der Polymerpartikel mit elektromagnetischer Strahlung, beispielsweise im Infrarotbereich mittels einer Wärmequelle, mit Mikrowellen-, Radiofrequenzstrahlung oder dergleichen.

Selbstverständlich ist es anlässlich des vorbeschriebenen Vorschäumens der gemäß Schritt (d) erhaltenen expandierbaren Polymerpartikel auf der Basis von Polylactid - seien sie je nach eingestelltem Druck des Kühlfluides noch im Wesentlichen kompakt oder seien die bereits teilweise expandiert bzw. aufgeschäumt - bei erhöhter Temperatur grundsätzlich möglich, hierbei einen gegenüber Umgebungsdruck erhöhten oder auch verminderten Druck einzustellen, doch können die gemäß Schritt (d) erhaltenen Polymerpartikel aus den genannten Gründen in einfacher und kostengünstiger Weise insbesondere im Wesentlichen bei Umgebungsdruck vorgeschäumt werden, um die vorbeschriebenen, sehr geringen Schüttdichten bzw. die sehr hohen Porenvolumina zu erzielen.

Während die mittels des erfindungsgemäßen Verfahrens hergestellten expandierbaren und/oder zumindest teilweise expandierten Polymerpartikel auf der Basis von Polylactid, wie bereits beschrieben, in breiten Grenzen variable Schüttdichten besitzen können, kann in vorteilhafter Ausgestaltung vorgesehen sein, dass sie
- einen Anteil an Polylactid in der Polymermatrix von mehr als 95 Mass.-%;
- im kompaktierten Zustand gemäß Schritt (d) (also vor einem etwaigen Vorschäumen) eine Schüttdichte von wenigstens etwa 150 g/l, insbesondere von wenigstens etwa 200 g/l, vorzugsweise von wenigstens etwa 250 g/l, so dass sie relativ kompakt auf Lager gehalten und/oder transportiert werden können; und/oder insbesondere
- nach Vorschäumen bei einer Temperatur zwischen 50°C und 150°C über einen Zeitraum von 100 s bei Umgebungsdruck eine Schüttdichte von höchstens etwa 125 g/l, insbesondere von höchstens etwa 100 g/l, vorzugsweise von höchstens 75 g/l, beispielsweise von höchstens etwa 50 g/l,
aufweisen.

Weitere Merkmale und Vorteile der Erfindung ergeben sich aus den nachfolgenden Ausführungsbeispielen.

### Ausführungsbeispiele 1 bis 4:

### Herstellung von thermoplastischen Polymerschaumpartikeln aus Polylactiden unterschiedlichen Typs mit iso-Butan als Treibmittel:

Anlässlich der Durchführung der Ausführungsbeispiele 1 bis 4 wurden Polymerschaumpartikel aus verschiedenen Rezepturen von Polylactiden "PLA 1", "PLA 2" und "PLA 3" mit unterschiedlicher Kristallinität unter Einsatz von iso-Butan als Treibmittel und Talkum als Nukleierungsmittel erzeugt, wobei die eingesetzten Rezepturen in der nachfolgenden Tabelle 1 wiedergegeben sind:

**Tabelle 1: Zusammensetzung der Rezepturen gemäß den Ausführungsbeispielen 1 bis 4.**

| **Ausführungsbeispiel** | PLA 1 | PLA 2 | PLA 3 | Treibmittel iso-Butan | Nukleierungsmittel Talkum |
|---|---|---|---|---|---|
| | Typ "6302D" (amorph) | Typ "4060D" (amorph) | Typ "8052D" (teilkristallin) | | |
| 1 | 100 Mass.-% | 0 | 0 | 5 Mass.-% | 0,5 Mass.-% |
| 2 | 0 | 100 Mass.-% | 0 | 5 Mass.-% | 0,5 Mass.-% |
| 3 | 50 Mass.-% | 0 | 50 Mass.-% | 5 Mass.-% | 0,5 Mass.-% |
| 4 | 0 | 0 | 100 Mass.-% | 5 Mass.-% | 0,5 Mass.-% |

Die obigen Rezepturen der verschiedenen Typen von Polylactid mit 0,5 Mass.-% Talkum gemäß den Ausführungsbeispielen 1 bis 4 wurden einem Doppelschneckenextruder des Typs "Leistritz iMaxx 27" mit einem L/D-Verhältnis von 48 aufgegeben und mit einem Durchsatz zwischen 15 kg/h und 25 kg/h bei einer Temperatur zwischen 140°C und 180°C extrudiert.

Das Treibmittel in Form von iso-Butan wurde dem Extruder jeweils über eine Gasdosierung des Typs "LEWA ecofoam" zugesetzt. Das auf diese Weise mit iso-Butan versetzte Extrudat wurde entweder über ein Düsenaggregat in Form einer Lochplatte mit 12 Düsenöffnungen von jeweils 1 mm Durchmesser (Ausführungsbeispiele 1, 3 und 4) oder über eine Monodüse mit einem Durchmesser von 2,2 mm (Ausführungsbeispiel 2), welche jeweils auf einer Temperatur zwischen 190°C und 270°C gehalten wurden, aus dem Doppelschneckenextruder ausgebracht und direkt in eine Kühlgranulierung des Typs "GALA LPU" überführt. Als Kühlfluid wurde Wasser bei einer Temperatur von 40°C und einem Druck von 9 bar (Ausführungsbeispiele 1, 3 und 4) bzw. 5 bar (Ausführungsbeispiel 2) verwendet. Von den auf diese Weise erhaltenen expandierbaren Polylactid-Partikeln wurde schließlich die Schüttdichte ermittelt.

Die Schüttdichten der erzeugten expandierbaren Polylactid-Partikel einschließlich der jeweils eingestellten Verfahrensparameter sind in der nachstehenden Tabelle 2 zusammengefasst.

**Tabelle 2: Verfahrensparameter der Ausführungsbeispiele 1 bis 4 einschließlich Schüttdichten der auf diese Weise erzeugten expandierbaren Polylactid-Partikel.**

| **Ausführungsbeispiel** | Durchsatz | Extrusionstemperatur | Düsentemperatur | Düsendurchmesser | Druck und Temperatur Kühlfluid | Schüttdichte PLA-Partikel |
|---|---|---|---|---|---|---|
| 1 | 25 kg/h | 180-150°C | 270°C | 1,0 mm × 12 | 9 bar / 40°C | 486 g/l |
| 2 | 15 kg/h | 180-140°C | 190°C | 2,2 mm × 1 | 5 bar / 40°C | 190 g/l |
| 3 | 25 kg/h | 180-160°C | 250°C | 1,0 mm × 12 | 9 bar / 40°C | 470 g/l |
| 4 | 25 kg/h | 180-160°C | 250°C | 1,0 mm × 12 | 9 bar / 40°C | 430 g/l |

Die in der obigen Weise erzeugten expandierbaren Polylactid-Partikel wurden zur Weiterverarbeitung zu expandierten Polylactid-Schaumpartikeln schließlich einem Vorschäumvorgang unterzogen, indem sie in einem Vorschäumer des Typs "Erlenbach ED2HP" bei Umgebungsdruck über jeweils zwei verschiedene Schäumzeiten Wasserdampf mit einer Temperatur zwischen 52°C und 73°C exponiert wurden. Anschließend wurden die Schüttdichten der auf diese Weise vorgeschäumten Polylactid-Schaumpartikel ermittelt.

Darüber hinaus wurden aus den vorgeschäumten Polylactid-Schaumpartikel Formteilproben hergestellt, indem sie in einem Formteilautomaten des Typs "Erlenbach EHVCE 870/670" mittels Heißdampf miteinander zu dem Formteil verschweißt wurden, wonach die Dichte der derart erhaltenen Formteile ermittelt wurde.

In der nachfolgenden Tabelle 3 sind einerseits die Vorschäumparameter der vorgeschäumten Polylactid-Schaumpartikel einschließlich der jeweils erhaltenen Schüttdichten derselben, andererseits die Dichten der aus den vorgeschäumten Polylactid-Schaumpartikel erhaltenen Polylactid-Formteile zusammengefasst.

**Tabelle 3: Vorschäumparameter der Ausführungsbeispiele 1 bis 4 einschließlich Schüttdichten der auf diese Weise vorgeschäumten Polylactid-Schaumpartikel sowie Dichten der hieraus erzeugten Formteile.**

| **Ausführungsbeispiel** | Vorschäumzeit | | Vorschäumtemperatur | Schüttdichte PLA-Partikel | Dichte Formteil |
|---|---|---|---|---|---|
| 1 | 100 s | | 58°C | 25 g/l | 27 g/l |
| | 60 s | | 54°C | 66 g/l | 69 g/l |
| 2 | 100 s | | 52°C | 70 g/l | 94 g/l |
| | 30 s | | 52°C | 120 g/l | --- |
| 3 | 100 s | | 56°C | 25 g/l | 29 g/l |
| | 65 s | | 58°C | 55 g/l | 70 g/l |
| 4 | 100 s | | 73°C | 16 g/l | 38 g/l |
| | 65 s | | 58°C | 65 g/l | 77 g/l |

### Vergleichsbeispiele 1 und 2:

### Herstellung von thermoplastischen Polymerschaumpartikeln aus Polylactiden unterschiedlichen Typs mit iso-Pentan anstelle von iso-Butan als Treibmittel:

Anlässlich der Durchführung der Vergleichsbeispiele 1 und 2 wurden Polymerschaumpartikel aus dem Polylactid "PLA 1" entsprechend dem obigen Ausführungsbeispiel 1 unter Einsatz von verschiedenen Anteilen an iso-Pentan anstelle von iso-Butan als Treibmittel und Talkum als Nukleierungsmittel erzeugt, wobei die eingesetzten Rezepturen in der nachfolgenden Tabelle 4 wiedergegeben sind:

**Tabelle 4: Zusammensetzung der Rezepturen gemäß den Vergleichsbeispielen 1 und 2.**

| **Vergleichsbeispiel** | PLA 1 | PLA 2 | PLA 3 | Treibmittel iso-Pentan | Nukleierungsmittel Talkum |
|---|---|---|---|---|---|
| | Typ "6302D" (amorph) | Typ "4060D" (amorph) | Typ "8052D" (teilkristallin) | | |
| 1 | 100 Mass.-% | 0 | 0 | 5 Mass.-% | 0,5 Mass.-% |
| 2 | 100 Mass.-% | 0 | 0 | 7 Mass.-% | 0,5 Mass.-% |

Die obigen Rezepturen des Polylactids "PLA 1" mit Talkum gemäß den Vergleichsbeispielen 1 und 2 wurden in entsprechender Weise wie bei dem obigen Ausführungsbeispiel 1 dem Doppelschneckenextruder des Typs "Leistritz iMaxx 27" mit einem L/D-Verhältnis von 48 aufgegeben und mit einem Durchsatz von 25 kg/h bei einer Temperatur zwischen 160°C und 180°C extrudiert. Das Treibmittel in Form von iso-Pentan wurde dem Extruder jeweils über die Gasdosierung des Typs "LEWA ecofoam" zugesetzt. Das auf diese Weise mit iso-Pentan versetzte Extrudat wurde über das Düsenaggregat in Form einer Lochplatte mit 12 Düsenöffnungen von jeweils 1 mm Durchmesser (wiederum entsprechend dem obigen Ausführungsbeispiel 1), welche auf einer Temperatur zwischen 250°C und 270°C gehalten wurden, aus dem Doppelschneckenextruder ausgebracht und direkt in die Kühlgranulierung des Typs "GALA LPU" überführt. Als Kühlfluid wurde wiederum Wasser bei einer Temperatur von 40°C und einem Druck von 9 bar (entsprechend dem obigen Ausführungsbeispiel 1) verwendet. Von den auf diese Weise erhaltenen expandierbaren Polylactid-Partikeln wurde schließlich die Schüttdichte ermittelt.

Die Schüttdichten der erzeugten expandierbaren Polylactid-Partikel einschließlich der jeweils eingestellten Verfahrensparameter sind in der nachstehenden Tabelle 5 zusammengefasst.

**Tabelle 5: Verfahrensparameter der Vergleichsbeispiele 1 und 2 einschließlich Schüttdichten der auf diese Weise erzeugten expandierbaren Polylactid-Partikel.**

| **Vergleichsbeispiel** | Durchsatz | Extrusionstemperatur | Düsentemperatur | Düsendurchmesser | Druck und Temperatur Kühlfluid | Schüttdichte PLA-Partikel |
|---|---|---|---|---|---|---|
| 1 | 25 kg/h | 180-160°C | 270°C | 1,0 mm × 12 | 9 bar / 40°C | 750 g/l |
| 2 | 25 kg/h | 180-160°C | 250°C | 1,0 mm × 12 | 9 bar / 40°C | 726 g/l |

Die in der obigen Weise erzeugten expandierbaren Polylactid-Partikel wurden zur Weiterverarbeitung zu expandierten Polylactid-Schaumpartikeln schließlich wiederum einem Vorschäumvorgang unterzogen, indem sie entsprechend dem obigen Ausführungsbeispiel 1 in dem Vorschäumer des Typs "Erlenbach ED2HP" bei Umgebungsdruck über eine Schäumzeit von jeweils 100 s Wasserdampf mit einer Temperatur zwischen 58°C und 65°C exponiert wurden. Anschließend wurden die Schüttdichten der auf diese Weise vorgeschäumten Polylactid-Schaumpartikel ermittelt.

In der nachfolgenden Tabelle 6 sind die Vorschäumparameter der vorgeschäumten Polylactid-Schaumpartikel einschließlich der jeweils erhaltenen Schüttdichten derselben zusammengefasst.

**Tabelle 6: Vorschäumparameter der Vergleichsbeispiele 1 und 2 einschließlich Schüttdichten der auf diese Weise vorgeschäumten Polylactid-Schaumpartikel.**

| **Vergleichsbeispiel** | Vorschäumzeit | Vorschäumtemperatur | Schüttdichte PLA-Partikel |
|---|---|---|---|
| 1 | 100 s | 58°C | 240 g/l |
| 2 | 100 s | 65°C | 200 g/l |

Aus den Ausführungsbeispielen ist ersichtlich, dass es aufgrund der Kombination des erfindungsgemäßen Einsatzes eines organischen Treibmittels aus der Gruppe n-Butan, iso-Butan und Propan - hier: n-Butan - in Verbindung mit der Granulierung in einem unter erhöhten Druck stehenden Kühlfluid - hier: Wasser - möglich ist, Polylactid-Schaumpartikel mit einer gegenüber dem Stand der Technik geringeren Schüttdichte bzw. mit einem demgegenüber größeren Porenvolumen herzustellen, ohne die Polymerstruktur des Polylactides zu verändern und insbesondere ohne sie mittels etwaiger Vernetzungs- oder Kettenverlängerungsmittel zu vernetzen.

Wie in der obigen Tabelle 2 erkennbar, lassen sich hierbei anlässlich des Schrittes (d) des erfindungsgemäßen Verfahrens zunächst expandierbare, aber noch im Wesentlichen kompakte Polylactid-Partikel erzeugen, welche eine relativ hohe Schüttdichte besitzen, wie es zum Zwecke einer möglichst kompakten Lagerung oder zum Transport erwünscht sein kann, sofern der Druck des Kühlfluides größer als etwa 5 bar gewählt wird (vgl. die Ausführungsbeispiele 1, 3 und 4 gemäß Tabelle 2), wohingegen im Falle eines demgegenüber geringeren Überdruckes des Kühlfluides von etwa 5 bar oder kleiner auch bereits teilweise expandierte Polylactid-Partikel erzeugt werden können, welche infolge eines teilweisen Aufschäumens in dem Kühlfluid eine geringere Schüttdichte besitzen (vgl. das Ausführungsbeispiel 2 gemäß Tabelle 2). Die gewünschte Schüttdichte lässt sich auf diese Weise in breiten Intervallen an den gewünschten Verwendungszweck anpassen.

Insbesondere ergeben sich jedoch im Falle eines - hier drucklosen und folglich in vorrichtungstechnischer Hinsicht sehr einfachen und kostengünstigen - Vorschäumens der gemäß Schritt (d) des erfindungsgemäßen Verfahrens erhaltenen expandierbaren Polylactid-Partikel über kurze Zeiträume von etwa 100 s äußerst geringe Schüttdichten der expandierten bzw. vorgeschäumten Polylactid-Partikel, welche noch unterhalb jenen liegen, wie sie im Stand der Technik nur unter Zuhilfenahme von Vernetzungsmitteln oder Kettenverlängerungsmittel möglich sind, wobei Schüttdichten von deutlich kleiner 20 g/l problemlos erzeugt werden können (vgl. die Ausführungsbeispiele 1, 3 und 4 gemäß obiger Tabelle 3). Hierbei lassen sich selbst dann relativ geringe, wenn auch demgegenüber etwas höhere Schüttdichten erzeugen, wenn der Druck des Kühlfluides anlässlich Schritt (d) des erfindungsgemäßen Verfahrens nur auf einen gegenüber Umgebungsdruck geringfügig höheren Druck von etwa 1,5 bar bis etwa 5 bar eingestellt wird, bei welchem die Polylactid-Partikel bereits anlässlich des Granuliervorgangs teilweise aufschäumen (vgl. das Ausführungsbeispiel 2 gemäß obiger Tabelle 3). Darüber hinaus lässt sich die gewünschte Schüttdichte der vorgeschäumten Polylactid-Schaumpartikel in sehr einfacher Weise durch die Vorschäumzeit bei mäßiger Vorschäumtemperatur sowie auch durch den Anteil des erfindungsgemäßen organischen Treibmittels variieren (vgl. wiederum die obige Tabelle 3), wobei die gegenüber dem Stand der Technik deutlich geringeren Schüttdichten bereits im Falle von Vorschäumzeiten von etwa 100 s erreicht werden.

In entsprechender Weise lässt sich folglich die Dichte eines aus den solchermaßen hergestellten Polylactid-Schaumpartikeln erzeugten Polymer-Formteils einstellen, wobei der in den Polylactid-Schaumpartikeln auch nach ihrem Vorschäumen stets noch vorhandene Restgehalt an dem erfindungsgemäßen organischen Treibmittel beim Verschweißen der Schaumpartikel zu dem Formteil für den Aufbau eines (zusätzlichen) Andruckes der Schaumpartikel aneinander sorgt, welcher eine weitere Expansion der Schaumpartikel während ihrer Formgebung zu dem Formteil verursacht und folglich eine innige und großflächige Schweißverbindung der Schaumpartikel untereinander bei einer sehr geringen Dichte des entsprechenden Polymer-Formteils sicherstellt.

Wie aus den Vergleichsbeispielen 1 und 2 erkennbar, sind vergleichbar geringe Schüttdichten von Schaumpartikeln aus reinem, d.h. unvernetztem Polylactid nicht erreichbar, wenn bei ansonsten entsprechender Verfahrensführung ein im Stand der Technik bislang als gleichwirkend erachtetes Treibmittel - hier: iso-Pentan - eingesetzt wird. Die Schüttdichte solcher Polylactid-Partikel lässt sich auch mittels Vorschäumens selbst dann nicht auf einen mit den erfindungsgemäßen Polylactid-Schaumpartikeln vergleichbaren Wert einstellen, wenn der Anteil an Treibmittel (hier: von 5 Mass.- % auf 7 Mass.-%) erhöht wird (vgl. die Vergleichsbeispiele 1 und 2 gemäß obiger Tabelle 6).

Nicht zuletzt sei erwähnt, dass eine Formteilprobe aus den erfindungsgemäß hergestellten Polylactid-Schaumpartikeln - hier: gemäß dem obigen Ausführungsbeispiel 3 - dem Flammschutztest gemäß DIN 4102 B2 (EN 13501) unterzogen worden ist, wobei festgestellt wurde, dass das Formteil den Flammschutztest besteht, ohne dass dem Polylactid zusätzlich Flammschutzmittel zugesetzt worden sind.

## Patentansprüche

1. Verfahren zur Herstellung von thermoplastischen, expandierbaren und/oder zumindest teilweise expandierten Polymerpartikeln aus einer Polymermatrix, welche aus Polylactid oder einem Polymer-Blend aus wenigstens 90 Mass.-% Polylactid mit wenigstens einem weiteren thermoplastischen Polymer gebildet ist, umfassend die folgenden Schritte:
(a) Aufgeben der Polymermatrix in einen Extruder sowie Plastifizieren und Homogenisieren der Polymermatrix in dem Extruder unter Ausschluss von Vernetzungsmitteln und/oder Kettenverlängerungsmitteln;
(b) Zusetzen von wenigstens einem organischen Treibmittel aus der Gruppe n-Butan, iso-Butan und Propan einschließlich Mischungen derselben und Eindispergieren des wenigstens einen Treibmittels in die plastifizierte Polymermatrix in dem Extruder;
(c) Ausbringen des mit dem wenigstens einen Treibmittel versetzten, plastifizierten Polylactids aus dem Extruder durch wenigstens eine Extruderdüse; und
(d) Granulieren des extrudierten und mit dem wenigstens einen Treibmittel versetzten Polymerstrangs stromab der Extruderdüse unter Bildung der expandierbaren und/oder zumindest teilweise expandierten Polymerpartikel,
wobei die Schritte (c) und (d) in einem unter gegenüber Umgebungsdruck erhöhten Druck stehenden Kühlfluid durchgeführt werden, in welchem die Polymerpartikel unter deren Glastemperatur abgekühlt werden.

2. Verfahren nach Anspruch 1, **dadurch gekennzeichnet, dass** ein Anteil an Polylactid in der Polymermatrix von mehr als 95 Mass.-% eingestellt wird.

3. Verfahren nach Anspruch 1 oder 2, **dadurch gekennzeichnet, dass** das wenigstens eine organische Treibmittel in einem Anteil von 1 Mass.-% bis 20 Mass.-%, insbesondere von 2 Mass.-% bis 15 Mass.-%, vorzugsweise von 3 Mass.- % bis 10 Mass.-%, bezogen auf die Masse der Polymermatrix, zugesetzt wird.

4. Verfahren nach einem der Ansprüche 1 bis 3, **dadurch gekennzeichnet, dass** der Polymermatrix zwischen 0 und 2 Mass.-%, insbesondere zwischen 0 und 1 Mass.-%, bezogen auf die Masse der Polymermatrix, wenigstens eines Nukleierungsmittels, insbesondere auf der Basis von Talkum, zugesetzt wird.

5. Verfahren nach einem der Ansprüche 1 bis 4, **dadurch gekennzeichnet, dass** der Polymermatrix zwischen insgesamt 0 und 15 Mass.-%, insbesondere zwischen insgesamt 0 und 10 Mass.-%, wenigstens eines Additivs, insbesondere aus der Gruppe der Farbstoffe und Pigmente, der Flammschutzmittel, der Stabilisatoren, der Infrarot-Absorber und der Verarbeitungshilfsmittel, zugesetzt wird.

6. Verfahren nach einem der Ansprüche 1 bis 5, **dadurch gekennzeichnet, dass** als Kühlfluid eine Flüssigkeit, insbesondere ein wässriges Medium, eingesetzt wird.

7. Verfahren nach einem der Ansprüche 1 bis 6, **dadurch gekennzeichnet, dass** das Kühlfluid unter einem Druck von
- wenigstens 1,5 bar, insbesondere von wenigstens 2 bar, vorzugsweise von wenigstens 5 bar; und/oder
- höchstens 30 bar, insbesondere von höchstens 25 bar, vorzugsweise von wenigstens 20 bar,
gehalten wird.

8. Verfahren nach einem der Ansprüche 1 bis 7, **dadurch gekennzeichnet, dass** das Kühlfluid auf einer Temperatur von
- wenigstens 0°C, insbesondere von wenigstens 5°C, vorzugsweise von wenigstens 10°C; und/oder
- höchstens 90°C, insbesondere von höchstens 70°C, vorzugsweise von höchstens 50°C,
gehalten wird.

9. Verfahren nach einem der Ansprüche 1 bis 8, **dadurch gekennzeichnet, dass** die gemäß Schritt (d) erhaltenen expandierbaren und/oder zumindest teilweise expandierten Polymerpartikel bei einer Temperatur zwischen 50°C und 150°C, insbesondere zwischen 50°C und 100°C, vorgeschäumt werden.

10. Verfahren nach Anspruch 9, **dadurch gekennzeichnet, dass** die gemäß Schritt (d) erhaltenen expandierbaren und/oder zumindest teilweise expandierten Polymerpartikel im Wesentlichen bei Umgebungsdruck vorgeschäumt werden.

11. Thermoplastische, expandierbare und/oder zumindest teilweise expandierte Polymerpartikel aus einer Polymermatrix, welche aus Polylactid oder einem Polymer-Blend aus wenigstens 90 Mass.-% Polylactid mit wenigstens einem weiteren thermoplastischen Polymer gebildet ist, wobei die Polymermatrix frei von Vernetzungsmitteln und/oder Kettenverlängerungsmitteln ist und wenigstens ein organisches Treibmittel aus der Gruppe n-Butan, iso-Butan und Propan einschließlich Mischungen derselben enthält, hergestellt gemäß einem Verfahren nach einem der Ansprüche 1 bis 10.

12. Polymerpartikel nach Anspruch 11, **dadurch gekennzeichnet, dass** sie
- einen Anteil an Polylactid in der Polymermatrix von mehr als 95 Mass.-%; und/oder
- im kompaktierten Zustand gemäß Schritt (d) eine Schüttdichte von wenigstens 150 g/l, insbesondere von wenigstens 200 g/l, vorzugsweise von wenigstens 250 g/l; und/oder
- nach Vorschäumen bei einer Temperatur zwischen 50°C und 150°C über einen Zeitraum von 100 s bei Umgebungsdruck eine Schüttdichte von höchstens 125 g/l, insbesondere von höchstens 100 g/l, vorzugsweise von höchstens 75 g/l,
aufweisen.

## Claims

1. Process for producing thermoplastic, expandable and/or at least partially expanded polymer particles composed of a polymer matrix formed by polylactide or a polymer blend comprising at least 90% by mass of polylactide together with at least one further thermoplastic polymer, comprising the following steps:
(a) introduction of the polymer matrix into an extruder and plasticization and homogenization of the polymer matrix in the extruder with exclusion of crosslinkers and/or chain extenders;
(b) addition of at least one organic blowing agent from the group consisting of n-butane, isobutane and propane including mixtures thereof and dispersion of the at least one blowing agent in the plasticized polymer matrix in the extruder;
(c) discharge of the plasticized polylactide admixed with the at least one blowing agent from the extruder through at least one extruder die; and
(d) pelletization of the extruded polymer strand admixed with the at least one blowing agent downstream of the extruder die to form the expandable and/or at least partially expanded polymer particles,
wherein the steps (c) and (d) are carried out in a cooling fluid under a pressure above ambient pressure, in which the polymer particles are cooled below their glass transition temperature.

2. Process according to Claim 1, **characterized in that** a proportion of polylactide in the polymer matrix of more than 95% by mass is set.

3. Process according to Claim 1 or 2, **characterized in that** the at least one organic blowing agent is added in a proportion of from 1% by mass to 20% by mass, in particular from 2% by mass to 15% by mass, preferably from 3% by mass to 10% by mass, based on the mass of the polymer matrix.

4. Process according to any of Claims 1 to 3, **characterized in that** from 0 to 2% by mass, in particular from 0 to 1% by mass, based on the mass of the polymer matrix, of at least one nucleating agent, in particular based on talc, is added to the polymer matrix.

5. Process according to any of Claims 1 to 4, **characterized in that** a total of from 0 to 15% by mass, in particular a total of from 0 to 10% by mass, of at least one additive, in particular from the group consisting of dyes and pigments, flame retardants, stabilizers, infrared absorbers and processing aids, is added to the polymer matrix.

6. Process according to any of Claims 1 to 5, **characterized in that** a liquid, in particular an aqueous medium, is used as cooling fluid.

7. Process according to any of Claims 1 to 6, **characterized in that** the cooling fluid is kept under a pressure of
- at least 1.5 bar, in particular at least 2 bar, preferably at least 5 bar; and/or
- not more than 30 bar, in particular not more than 25 bar, preferably at least 20 bar.

8. Process according to any of Claims 1 to 7, **characterized in that** the cooling fluid is kept at a temperature of
- at least 0°C, in particular at least 5°C,
preferably at least 10°C; and/or
- not more than 90°C, in particular not more than 70°C, preferably not more than 50°C.

9. Process according to any of Claims 1 to 8, **characterized in that** the expandable and/or at least partially expanded polymer particles obtained in step (d) are prefoamed at a temperature in the range from 50°C to 150°C, in particular from 50°C to 100°C.

10. Process according to Claim 9, **characterized in that** the expandable and/or at least partially expanded polymer particles obtained in step (d) are prefoamed at essentially ambient pressure.

11. Thermoplastic, expandable and/or at least partially expanded polymer particles composed of a polymer matrix formed by polylactide or a polymer blend comprising at least 90% by mass of polylactide together with at least one further thermoplastic polymer, wherein the polymer matrix is free of crosslinkers and/or chain extenders and contains at least one organic blowing agent from the group consisting of n-butane, isobutane and propane including mixtures thereof, produced by a process according to any of Claims 1 to 10.

12. Polymer particles according to Claim 11, **characterized in that** they have
- a proportion of polylactide in the polymer matrix of more than 95% by mass; and/or
- in the compacted state according to step (d) a bulk density of at least 150 g/l, in particular at least 200 g/l, preferably at least 250 g/l; and/or
- after prefoaming at a temperature in the range from 50°C to 150°C for a period of 100 seconds at ambient pressure a bulk density of not more than 125 g/l,
in particular not more than 100 g/l, preferably not more than 75 g/l.

## Revendications

1. Procédé de fabrication de particules de polymère thermoplastiques, expansibles et/ou au moins en partie expansées réalisées à partir d'une matrice polymère, formées à partir de polylactide ou d'un mélange polymère composé d'au moins 90 % en masse de polylactide avec au moins un polymère thermoplastique supplémentaire, comprenant les étapes suivantes :
autre polymère thermoplastique
(a) le placement de la matrice polymère dans une extrudeuse ainsi que la plastification et l'homogénéisation de la matrice polymère dans l'extrudeuse avec exclusion des agents réticulants et/ou des agents d'allongement de chaîne ;
(b) le remplacement d'au moins un carburant gazeux organique appartenant au groupe n-butane, isobutane et propane comprenant des mélanges de ceux-ci et la dispersion de l'au moins un carburant gazeux dans la matrice polymère plastifiée dans l'extrudeuse ;
(c) la sortie du polylactide plastifié réticulé à l'aide de l'au moins un carburant gazeux hors de l'extrudeuse au travers d'au moins une buse d'extrudeuse ; et
(d) granulation de la chaîne de polymère extrudée et réticulée à l'aide de l'au moins un carburant gazeux en aval de la buse d'extrudeuse par formation des particules de polymère expansibles et/ou au moins en partie expansées ;
dans lequel les étapes (c) et (d) sont réalisées dans un fluide de refroidissement placé sous pression augmentée par rapport à la pression ambiante, dans lequel les particules de polymère sont refroidies sous la température du verre.

2. Procédé selon la revendication 1, **caractérisé en ce qu'**une teneur en polylactide supérieure à 95 % en masse est incorporée dans la matrice polymère.

3. Procédé selon la revendication 1 ou 2, **caractérisé en ce que** l'au moins un carburant organique gazeux est ajouté dans une teneur d'1 % en masse à 20 % en masse, notamment de 2 % en masse à 15 % en masse, de préférence de 3 % en masse à 10 % en masse, par rapport à la masse de la matrice polymère.

4. Procédé selon l'une quelconque des revendications 1 à 3, **caractérisé en ce qu'**au moins un agent nucléant, notamment à base de talc, est ajouté à la matrice polymère entre 0 et 2 % en masse, notamment entre 0 et 1 % en masse, par rapport à la masse de la matrice polymère.

5. Procédé selon l'une quelconque des revendications 1 à 4, **caractérisé en ce qu'**au moins un additif, notamment appartenant au groupe des colorants et pigments, des agents ignifuges, des stabilisateurs, des absorbants infrarouges et des produits auxiliaires est ajouté à la matrice polymère entre, en tout, 0 et 15 % en masse, notamment entre, en tout, 0 et 10 % en masse.

6. Procédé selon l'une quelconque des revendications 1 à 5, **caractérisé en ce que** le fluide de refroidissement utilisé est un fluide, notamment un agent aqueux.

7. Procédé selon l'une quelconque des revendications 1 à 6, **caractérisé en ce que** le fluide de refroidissement est maintenu à une pression :
- d'au moins 1,5 bar, notamment d'au moins 2 bars, de préférence d'au moins 5 bars ; et/ou
- de tout au plus 30 bars, notamment de tout au plus 25 bars, de préférence d'au moins 20 bars.

8. Procédé selon l'une quelconque des revendications 1 à 7, **caractérisé en ce que** le fluide de refroidissement est maintenu à une température :
- d'au moins 0°C, notamment d'au moins 5°C, de préférence d'au moins 10°C ; et/ou
- de tout au plus 90°C, notamment de de tout au plus 70°C, de préférence de tout au plus 50°C.

9. Procédé selon l'une quelconque des revendications 1 à 8, **caractérisé en ce que** les particules de polymère obtenues à l'étape (d), expansibles et/ou au moins en partie expansées, sont prémoussées à une température comprise entre 50°C et 150°C, notamment entre 50°C et 100°C.

10. Procédé selon la revendication 9, **caractérisé en ce que** les particules de polymère obtenues à l'étape (d), expansibles et/ou au moins en partie expansées, sont pour l'essentiel prémoussées à pression ambiante.

11. Particules de polymère thermoplastiques, expansibles et/ou au moins en partie expansées réalisées à partir d'une matrice polymère, formées à partir de polylactide ou d'un mélange polymère composé d'au moins 90 % en masse de polylactide avec au moins un polymère thermoplastique supplémentaire, dans lesquelles la matrice polymère est exempte d'agents réticulants et/ou d'agents d'allongement de chaîne et contient au moins un carburant gazeux organique appartenant au groupe au groupe n-butane, isobutane et propane comprenant des mélanges de ceux-ci, fabriquées selon un procédé selon l'une quelconque des revendications 1 à 10.

12. Particules de polymère selon la revendication 11, **caractérisées en ce qu'**elles comportent :
- une teneur en polylactide dans la matrice polymère de plus de 95 % en masse ; et/ou
- à l'état compacté de l'étape (d) une densité apparente d'au moins 150 g/l, notamment d'au moins 200 g/l, de préférence d'au moins 250 g/l ; et/ou
- après prémoussage à une température comprise entre 50°C et 150°C pendant une durée de 100 s à température ambiante, une densité apparente de tout au plus 125 g/l,
- notamment de tout au plus 100 g/l, de préférence de tout au plus 75 g/l.
